# EUROPEAN PATENT APPLICATION

(11) **EP 2 662 572 A1**
(43) Date of publication of application: **13.11.2013**
(21) Application number: 13163463.6
(22) Date of filing: 12.04.2013
(51) Int. Cl.: F04D 29/10, F04D 29/049, F04D 29/06, F16C 33/66

(54) **Sealing arrangement for the lubricant of a ball bearing in a flow machine**

(30) Priority: 09.05.2012 EP 12167285
(71) Applicant: SULZER PUMPEN AG, 8401 Winterthur (CH)
(72) Inventor: Manninen, Heikki, 35800 Mänttä (FI)
(74) Representative: Sulzer Management AG

(57) **Abstract**

The present invention relates to a sealing arrangement for a flow machine. The sealing arrangement of the present invention is applicable for sealing bearing arrangements of centrifugal pumps, mixers, blowers etc. The present invention is especially applicable in sealing a bearing assembly including two angular contact ball bearings used in back-to-back configuration. The present invention relates especially to a baffle (32) arranged between the bearing (6) and the bearing housing (30), the baffle (32) leaving a gap (36) between itself and the inner bearing ring (6i) for the oil to flow from the bearing to the oil channel (38), and from the oil channel (32) via a groove (20) back to the oil chamber (22).

## Description

### Technical field

The present invention relates to a sealing arrangement for a flow machine. The sealing arrangement of the present invention is applicable for sealing bearing arrangements of centrifugal pumps, mixers, blowers etc. The present invention is especially applicable in sealing a bearing assembly including two angular contact ball bearings used in back-to-back configuration.

### Background art

It is normal practice to use a pair of angular contact ball bearings in back-to-back configuration as a thrust bearing of a centrifugal pump. Such a thrust bearing is usually lubricated by means of an oil bath such that the oil level in an oil chamber at an axial side of the pair of bearings extends to the centerline of the roller means at their lowest rotational position. The pair of angular contact ball bearings is usually positioned to the end of the flow machine closer to the coupling to the drive shaft and fastened on the shaft by means of a nut. The bearing (of the pair of bearings) closer to the coupling, i.e. the outermost bearing pumps the lubrication oil towards the bearing cover by means of which the bearings are affixed to the bearing housing. The manufacturers of the bearings recommend that the thus pumped lubrication oil is returned to the oil chamber by means of a return groove or bore, which initiates from a local circular groove arranged in the bearing housing at the axially outer end of the radially outer bearing ring. However, it is a commonly accepted fact that such a return groove or bore does not function in the manner desired, but the lubrication oil seems to collect against the bearing cover and to raise high, i.e. towards the axis of the shaft resulting in a flood at the area of the shaft sealing comprised normally of a lip type seal or a labyrinth seal. Very often such a flooding of the lubrication oil results in a leakage of the sealing. Naturally, such a leakage is problematic as gradually the amount of lubrication oil in the oil chamber decreases and finally results in the dry running and breakage of the bearing. Additionally, leaking oil creates a harmful environmental risk.

Earlier the above discussed problem has been attempted to solve by improving the sealing capability of the labyrinth seal used as the shaft seal against the pumped oil by designing and manufacturing a specific throttling between the inner bearing ring and the labyrinth seal as is shown in Figure 5 of US-B2-6,672,830. Such a throttling has resulted in somewhat more effective sealing, but it has still been observed that especially at high rotational speeds it is not effective enough but the labyrinth seal starts leaking due to the bearing pumping oil towards the seal.

WO 2010051959 discusses a construction where, between the bearing and the bearing cover, there are two oil chambers separated from one another by means of a sealing ring leaving a narrow gap between itself and an axial sleeve belonging to the labyrinth seal for oil to flow from the first chamber to the second one. In this construction the first chamber is adjacent the bearing and receives oil flow from the bearing. The first chamber is provided with two passages for leading the oil away from the first chamber. In case the first chamber receives more oil than the passages may take out the excess oil flows via the narrow gap to the second chamber, which is, also, provided with a passage for leading oil out of the second chamber. Problems relating to this construction are: 1) that the volume of the first chamber is relatively large, whereby the oil is able to circulate round the volume, which means increased friction, heat generation and, as a consequence, high pumping loss, and 2) that, irrespective of the volume of the first chamber, the construction has a high flow capacity for the oil due to the oil return passages from the first chamber, which also results in high friction losses in the various flow passages, high energy consumption and heat generation.

US 20080044279 discusses a shaft sealing where an isolated drain path for lubricant has been arranged between the bearing and the bearing cover. The drain path is formed of a first chamber adjacent the bearing to which chamber the oil flown through or pumped by the bearing may freely enter. The first chamber is limited at its side opposite to the bearing by means of a radial wall, which extends to the shaft leaving a gap between itself and the shaft for oil to flow to the second chamber. The second chamber extends radially outwardly from the shaft and continues as an axial passage taking oil to the oil cavity. A problem with this construction is the axial extension it requires. The US document does not discuss or show any means for .locking the bearing on the shaft, but in any case such means are needed. As the wall between the first and the second chamber extends to the close proximity of the shaft the wall has to be arranged so far from the bearing that the locking means may be left between the wall and the bearing, Therefore the volume of the first chamber grows and the distance between the bearing and the bearing cover is increased. Another problem related to the discussed construction is a high oil volume rotating in the first chamber, which increases friction, energy consumption and heat generation.

### Brief summary of the Invention

Thus an object of the present invention is to develop a new type of shaft sealing for a flow machine capable of avoiding at least one of the above discussed problems.

A further object of the present invention is to develop such a novel construction for a shaft sealing arrangement of a flow machine that is capable of returning all the oil that enters in front of the shaft sealing via the bearings back to the oil chamber at the opposite side of the bearings.

A still further object of the present invention is to minimize the volume of the chamber in which the oil enters from the bearing for keeping the amount of oil in contact with the rotating parts of the shaft and bearing at its minimum.

Yet one more object of the present invention is to minimize the energy consumption of the bearing by reducing the friction and heat generation into its minimum.

At least one of the objects of the present invention is fulfilled by a sealing arrangement for a flow machine, the flow machine comprising at least an axis, a shaft, a thrust bearing formed of a pair of angular contact ball bearings in back-to-back configuration, the ball bearings having an inner bearing ring and an outer bearing ring, a shaft sealing, a bearing cover at an outer end of the flow machine, an oil chamber at the side of the thrust bearing opposite the bearing cover, a baffle arranged between the thrust bearing and the bearing cover for forming an oil channel between itself and the bearing cover, and a return groove or bore for returning oil from the oil channel to the oil chamber, wherein there is a gap between the baffle and the inner bearing ring for the entire oil flow from the bearing to the oil channel and further to the oil chamber.

Other characterizing features of the sealing arrangement of the present invention become evident in the accompanying dependent claims.

### Brief Description of Drawing

The sealing arrangement for a flow machine is described more in detail below, with reference to the accompanying drawings, in which
Fig. 1 illustrates an end part of a shaft of a flow machine with the thrust bearing and shaft sealing in accordance with prior art,
Fig. 1a illustrates the shaft - thrust bearing - shaft seal assembly of Figure 1 in an enlarged scale,
Fig. 2 illustrates an end part of a shaft of a flow machine with the thrust bearing and shaft sealing in accordance a preferred embodiment of the present invention,
Fig. 2a illustrates the shaft - thrust bearing - shaft seal assembly of Figure 2 in an enlarged scale,
Fig. 3a illustrates the shaft - thrust bearing - shaft seal assembly of a second preferred embodiment of the present invention in an enlarged scale, and
Fig. 3b illustrates the shaft - thrust bearing - shaft seal assembly of a third preferred embodiment of the present invention in an enlarged scale.

### Detailed Description of Drawings

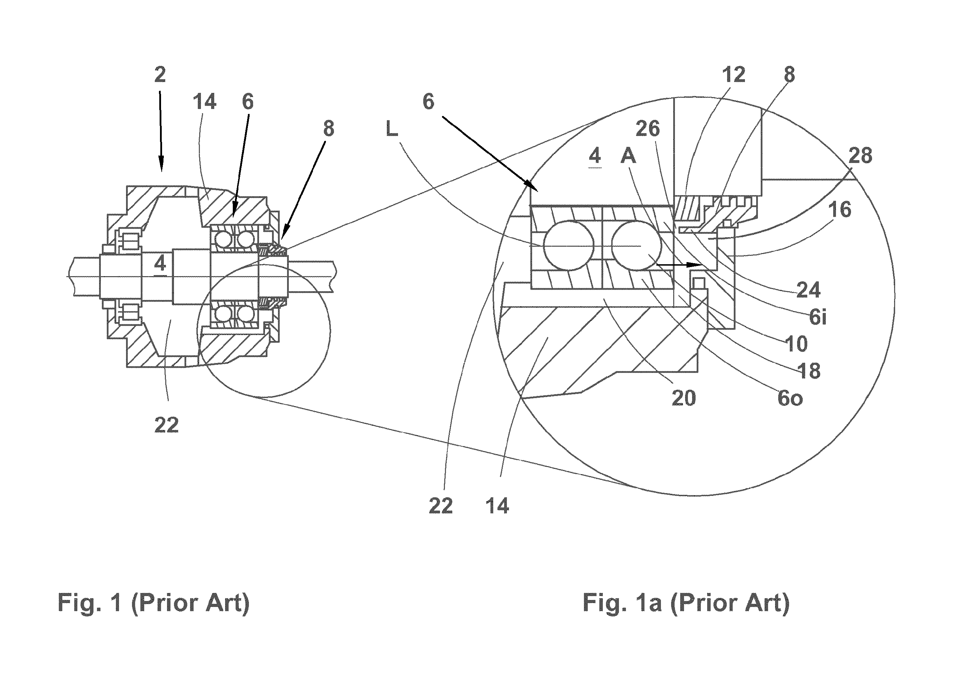

Figs. 1 and 1a illustrate a partial cross section of a prior art flow machine 2 having a shaft 4, a pair of angular contact ball bearings 6 in back-to-back configuration and a shaft sealing 8. The pair of angular contact ball bearings 6 acts as a thrust bearing of a flow machine, for instance a centrifugal pump. The angular contact ball bearings are formed of an inner ring 6i, an outer ring 6o and bearing balls 10 therebetween. The thrust bearing 6 has been fastened on the shaft 4 by tightening the inner rings 6i against a shoulder on the shaft 4 by means of a nut 12 that is sometimes provided with a washer. The outer rings 6o of the thrust bearing 6 are positioned against the inner surface of the bearing housing 14. Additionally, a bearing cover 16 having a central hole for the shaft 4 and the shaft sealing 8 has been fastened to the outer end of the bearing housing 14, i.e. to the end of the flow machine remove from the working member, for instance the impeller of a centrifugal pump or the rotor of a mixer. The shaft sealing 8, here a labyrinth seal has been shown, though also lip-type seals are sometimes used, is inserted in the central hole in the bearing cover 16. The bearing cover 16 is sealed by means of, for instance, O-rings in relation to both the shaft sealing 8 and the bearing housing 14. The bearing housing 14 is provided with a groove 18 at the outer end thereof at the side of the outer bearing ring 6o and a groove 20 or bore leading in more or less axial direction from the groove 18 to the central oil chamber 22. The oil level L in the oil chamber 22 extends normally up to the centerline of the bearing balls 10 as shown in Fig. 1 a.

The above is the traditional structure of the thrust bearing - shaft sealing assembly of a flow machine. The same has also been shown in US-B2-6,672,830. However, as already discussed earlier, the shaft sealing of the assembly was apt to leak. The leakage related problem was tried to be solved by means of an improvement shown in Figures 1 and 1a. The improvement in the shaft sealing 8 comprises a lip or an axial inward extension 24 of the shaft sealing 8 that leaves a narrow circumferential gap 26 between itself and the radial side face of the inner thrust bearing ring 6i. The purpose of the gap 26 is to restrict or to throttle the oil flow from the cavity 28 between the thrust bearing 6 and the bearing cover 16 towards the shaft.

However, now that the operation of the thrust bearing 6 comprising a pair of angular contact ball bearings 6 in back-to-back configuration has been thoroughly studied and understood it has been learned that even such a lip 24 and the gap 26 it creates with the inner bearing ring 6i cannot prevent the oil from entering the shaft sealing.

In other words, the right hand side ball bearing of the pair of angular contact ball bearings 6 function such that the balls 10 running along the inner surface of the outer bearing ring 6o squeezes oil from the oil film on the inner surface of the outer bearing ring 6o axially outwards. It means that the oil exiting the bearing ring surface has a high speed in axial direction (see arrow A in Fig. 1 a). The high speed of oil above the circular groove 18 results, in accordance with Bernoulli's law, a reduction in the pressure (i.e. a partial vacuum) above the groove 18, which makes the oil flow along the groove 20 or a corresponding bore from the oil chamber 22 towards the shaft sealing, i.e. in a direction opposite to what the groove 20 or bore is originally purposed for. In other words, the oil pumped by means of the bearing balls 10 axially out of the bearing reduces locally the pressure above the circular groove 18 to a value lower than the hydrostatic oil pressure in the oil chamber 22. Thus, the higher is the rotational speed of the shaft (or the bearing balls), the higher is the pressure difference between the groove 18 and the oil chamber 22, and the higher the oil level is raised in front of the shaft sealing 8 in cavity 28. Thereby it is clear that each prior art bearing assembly has its nominal speed of rotation by which the oil level is raised up to the surface of the shaft 4, which means, when using labyrinth type sealing, oil leakage through the sealing. When the operation of the angular contact ball bearings is understood in this detail it is also easy to understand that the throttling or gap 26 has little if any effect on preventing the leakage.

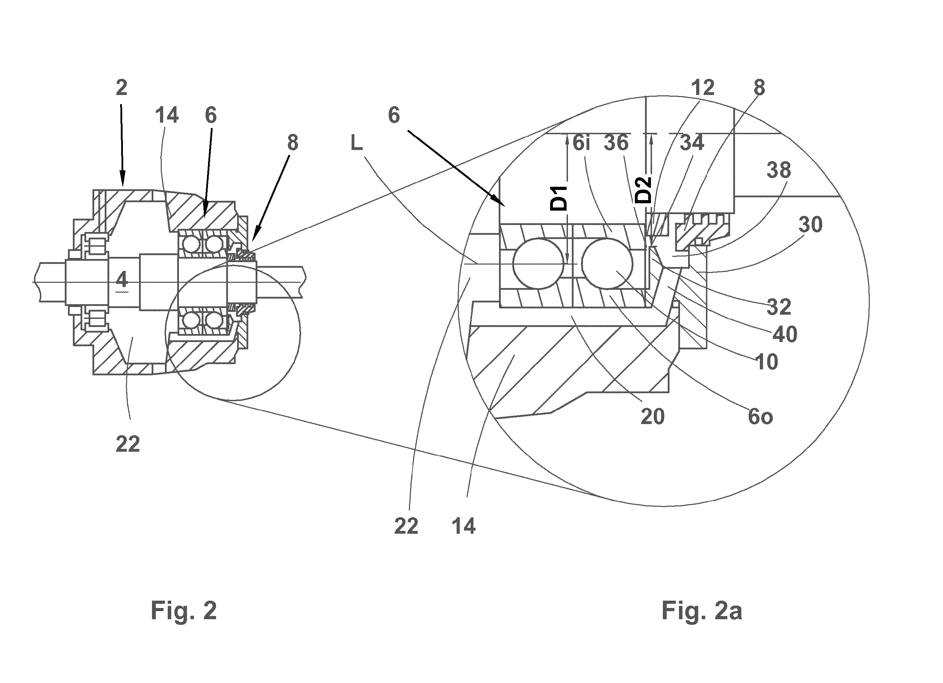

Figs. 2 and 2a illustrate a preferred embodiment of the present invention solving both the problem discussed in connection with Figures 1 and 1a and the problems referred to in the background art. Now that the prior art problem leading to the increased risk of oil leakage was due to bearing balls 10 pumping oil at a high speed transverse across the groove/channel that was designed for the removal of oil, and thus creating a partial vacuum there, the problem is solved by cutting the direct flow connection between the interior of the bearing and the oil return groove or bore. It has been accomplished by either redesigning the bearing cover 30 to include a baffle 32 or by arranging a separate baffle between the bearing cover and the thrust bearing 6. The embodiment shown in Figs. 2 and 2a discloses a bearing cover 30 with a baffle 32 forming a part of the bearing cover 30. In this embodiment the bearing cover 30 extends axially up to the radial face of the outer bearing ring 6o (of the right hand side angular contact ball bearing or the angular contact ball bearing facing the bearing cover or the outer end of the flow machine or that of the bearing housing) and has a radially inwardly (towards the shaft 4) directed baffle 32 that extends to the side of the inner bearing ring 6i (of the right hand side angular contact ball bearing or the angular contact ball bearing facing the bearing cover or the outer end of the flow machine or that of the bearing housing) such that the distance D2 from the axis of the flow machine to the inner surface 34 of the baffle 32 is smaller than the outer radius of the inner bearing ring 6i. Thus, a axial gap 36 is formed between the baffle 32 and the radial side face of the inner bearing ring 6i. The dimension of the gap 36 is preferably, but not necessarily, about 0,2 - 0,7 mm depending on the size of the bearings, rotational speed of the flow machine, etc. The baffle 32 and the part of the bearing cover 30 forming the axially outer face of the flow machine, or the bearing housing, leave a groove-like channel 38 therebetween, the channel 38 being open towards the shaft 4. The bottom of the channel 38 is provided with a bore 40 extending through the bearing cover 30 to a preferably axial groove 20 arranged in the inside surface of the bearing housing 14. The groove 20 may be replaced with an axial or slightly inclined bore if desired. The bore 40 and the groove 20 or bore function as the oil return passage in case oil from the thrust bearing 6 enters the channel 38 between the baffle 32 and the rest of the bearing cover 30.

The above described bearing cover construction solves the problem relating to the oil leakage by means of preventing the direct communication of the oil in the bearing 6 and the oil in the return groove 20. Now, in accordance with this preferred embodiment of the present invention, if the oil pressure is raised in the cavity between the bearing balls 10 and the baffle 32 due to the pumping effect of the balls the entire oil flow from the bearing 6 to the oil channel 38 and further to the oil chamber 22 is forced through the gap 36 between the baffle 32 and the inner bearing ring 6i and round the circumferential inner edge or inner surface 34 of the baffle 32 into the channel 38. However, the channel 38 of the present invention is an open cavity having no specific pressure conditions unlike the groove 18 of the prior art flow machine where a partial vacuum created in the groove 18 was drawing oil from the groove 20. Thus, as the inner circumference or inner surface 34 of the baffle 32 extends closer (dimension D2) to the axis of the flow machine than the oil level L (dimension D1), the oil entering the channel 38 raises the oil level in the channel whereafter the oil is able to return via the bore 40 and the groove 20 back to the oil chamber 22 as soon as the hydrostatic pressure in the channel 38 is higher than that in the oil chamber 22.

In other words, in the arrangement of the present invention the return channel 38 of the oil has been moved to an open position far from the rotary members and other areas of high flow velocity which would have a negative effect on the functioning of the return channel 38. The return bore 40 and the return groove 20 have to be dimensioned large enough to be capable of handling the entire oil flow.

It should also be understood that as the baffle 32 is at a small axial distance of less than 1 mm from the inner bearing ring, the volume of the cavity where the oil is rotating is minimized. This results in minimized oil circulation between the baffle and the bearing and thereby to minimized friction, energy consumption and heat generation.

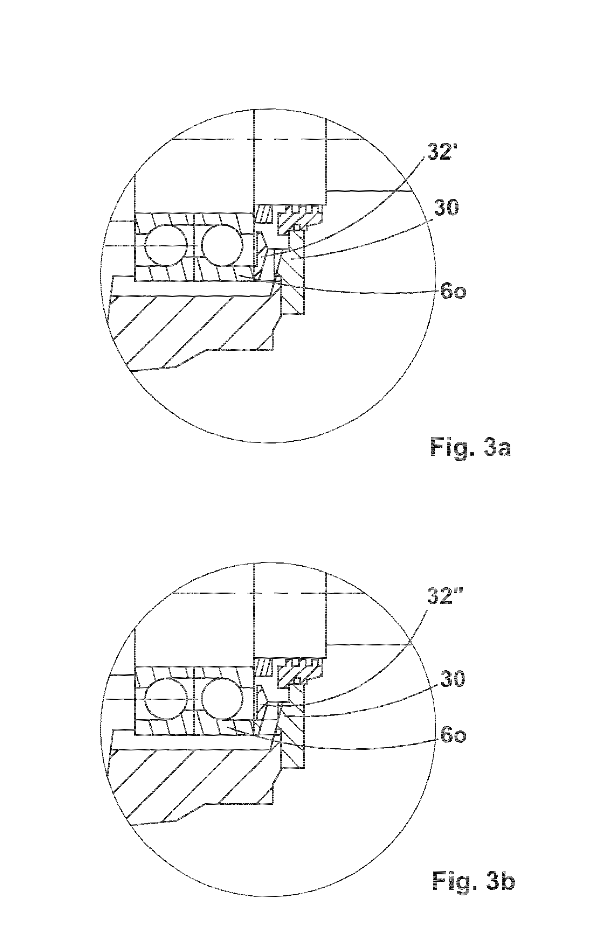

As already mentioned above the bearing cover and the baffle may also be separate parts as shown in Figures 3a and 3b. However, the functional part of the baffle i.e. the radially innermost part of the baffle is always the same, especially its dimensioning in relation to both the outer diameter of the inner bearing ring and the distance between the oil level in the oil chamber from the axis, as well as its distance from the inner bearing ring. Thus only the foot part i.e. the radially outer part of the baffle may vary. In accordance with Figure 3a the separate baffle 32' is pressed by the bearing cover 30 against the radially outer ring 6o of the axially outer bearing. In accordance with Figure 3b the baffle 32" is a separate part, preferably a ring arranged inside the bearing cover 30 between the bearing 6 and the bearing cover 30. The baffle 32" may extend axially from the bearing cover 30 to the level of the bearing or at a distance thereof (shown in Fig. 3b). In one further not illustrated embodiment the baffle is a separate member, like in Fig. 3b, but now it leaves an axial gap between itself and the bearing cover, whereby the gap may function as the oil channel 38. Preferably the baffle is, in its all structural alternatives a circular member surrounding the shaft of the flow machine, whereby also the channel 38 between the baffle and the (rest) of the bearing cover is a circular channel. However, the groove 20 or the corresponding bore and the bore 40 at the bottom of the channel 38 are located at the lowermost positions of the inner surface of the bearing housing 14, and the channel 38, respectively, for ensuring the best possible recirculation of oil back to the central oil chamber.

As can be seen from the above description a novel shaft sealing arrangement has been developed. While the invention has been herein described by way of examples in connection with what are at present considered to be the preferred embodiments, it is to be understood that the invention is not limited to the disclosed embodiments, but is intended to cover various combinations and/or modifications of its features and other applications within the scope of the invention as defined in the appended claims.

## Claims

1. A sealing arrangement for a flow machine, the flow machine comprising at least an axis, a shaft (4), a thrust bearing (6) formed of a pair of angular contact ball bearings in back-to-back configuration, the ball bearings having an inner bearing ring (6i) and an outer bearing ring (6o), a shaft sealing (8), a bearing cover (30) at an outer end of the flow machine, an oil chamber (22) at the side of the thrust bearing (6) opposite the bearing cover (30), a baffle (32, 32', 32") arranged between the thrust bearing (6) and the bearing cover (30) for forming an oil channel (38) between itself and the bearing cover (30), and a return groove (20) or bore for returning oil from the oil channel (38) to the oil chamber (22), **characterized in** a gap (36) between the baffle (32, 32', 32") and the inner bearing ring (6i) for the entire oil flow from the bearing to the oil channel (38) and further to the oil chamber (22).

2. The sealing arrangement as recited in claim 1, **characterized in that** the baffle (32, 32') is positioned against the outer bearing ring (6i), the baffle (32, 32') extending radially inwardly to the side of the inner bearing ring (6i) leaving the gap (36) therebetween.

3. The sealing arrangement as recited in claim 1, **characterized in that** the baffle (32, 32', 32") has an inner circumference or surface (34) the diameter of which is smaller than the outer diameter of the inner bearing ring (6i).

4. The sealing arrangement as recited in claim 1, **characterized in that**, when in use, the baffle (32, 32', 32") has an inner circumference or surface (34) the diameter D2 of which is smaller than the distance D1 from the oil level L to the axis of the flow machine.

5. The sealing arrangement as recited in claim 1, **characterized in that** the baffle (32, 32') is arranged to rest against the radial side surface of the outer bearing ring (6o).

6. The sealing arrangement as recited in claim 1, **characterized in that** the baffle (32') is a separate circular ring arranged between the bearing cover (30) and the outer bearing ring (6o).

7. The sealing arrangement as recited in claim 1, **characterized in that** the baffle (32") is a separate circular ring arranged between the bearing (6) and the bearing cover (30).

8. The sealing arrangement as recited in claim 1, **characterized in that** the baffle (32) is a part of the bearing cover (30).

9. The sealing arrangement as recited in claim 1, **characterized in that** the gap (36) between the baffle (32, 32', 32") and the inner bearing ring (6i) has a dimension of 0,2 - 0,7 mm.
